# EUROPEAN PATENT APPLICATION

(11) **EP 0 892 569 A2**
(43) Date of publication of application: **20.01.1999**
(21) Application number: 98250236.1
(22) Date of filing: 25.06.1998
(51) Int. Cl.: H04Q 7/38

(54) **A method of and a system for assigning a downlink channel for mobile radio communication**

(30) Priority: 26.06.1997 JP 170565/97
(71) Applicant: NEC CORPORATION, Tokyo (JP)
(72) Inventor: Uchida, Wataru, Minato-ku, Tokyo (JP)
(74) Representative: Patentanwälte Wenzel & Kalkoff

(57) **Abstract**

For enabling a base station to assign a downward channel having best quality for mobile communication with each individual mobile terminal, a mobile terminal comprises a communication quality measuring section (13) for measuring the communication quality of each of available downward channels transmitted from base stations (2) for other mobile terminals, a comparison section (15) for selecting a desirable downward channel giving the best value of the communication quality among the available downward channels, and a call request section (16) for preparing a call request including information of the desirable downward channel according to a call request format to be sent to one of the base stations (2).

## Description

The present invention relates to a method of and a system for selecting a downward channel to be assigned for mobile communication between a mobile terminal and a base station performed according to TDMA (Time Division Multiple Access) control, and particularly to the method of and the system for enabling the base station to assign a downward channel having best communication quality for the mobile terminal.

Concerning channel assigmnent of mobile communication, there have been proposed methods of switching a communication channel on the mobile terminal side by measuring communication quality of a downward channel actually assigned to the mobile terminal.

According to a method, for example, disclosed in a Japanese patent application laid open as Provisional Publication No. 254837/'88, a mobile terminal discriminates whether the downward channel has sufficient communication quality or not, by calculating the error rate of the monitor data multiplied on the voice channel actually receiving, and switches the downward channel or transfers to a standby status when the communication quality is discriminated to be insufficient.

In this method, however, it is not certain whether the quality of the communication channel, which has been assigned to the mobile terminal, is the best or not among available downward channels for the mobile terminal. Furthermore, even if the mobile terminal has switched the assigned channel into a new channel according to the error rate of the assigned channel, the new channel may not have the best communication quality. Hence, there may occur a lot of communication errors, which degrade the data transfer rate needing frequent data re-transmission.

This problem stems from the communication quality of downward channels possible to be assigned for the mobile terminal not having been measured before requiring a call. So, there is no assurance that the assigned downward channel be the best channel.

Therefore, a primary object of the present invention is to provide a method of and a system for enabling a base station to assign a downward channel having best quality for mobile communication with each individual mobile terminal.

In order to achieve the object, a method of assigning a downward channel of the invention, to be used for mobile communication between a mobile terminal and one of base stations according to a TDMA control, comprises:
a step performed by the mobile terminal of selecting a desirable downward channel having best communication quality for the mobile terminal among available downward channels which are receivable by the mobile terminal and transmitted from any of the base stations for other mobile terminals;
a step of requesting a call designating the desirable downward channel to a base station transmitting the desirable downward channel; and
a step of assigning a downward channel to the mobile terminal according to the desirable downward channel designated by the call request when the call request is received by the base station.

In the above method, the step of selecting the desirable downward channel is performed referring to communication quality of each of the available downward channels which is measured according to an error rate obtained for a certain number of successive frames of said each of the available downward channels making use of error check code included in each of the frames.

For realizing the above method, a system of the invention, for assigning a downward channel to be used for mobile communication between a mobile terminal and one of base stations according to a TDMA control, comprises:
a mobile terminal for selecting a desirable downward channel having best communication quality for the mobile terminal among available downward channels which are receivable by the mobile terminal and transmitted from any of the base stations for other mobile terminals by measuring communication quality of the available downward channels, and requesting a call with a call request including information for designating the desirable downward channel to a base station transmitting the desirable downward channel; and
a base station for assigning a downward channel to the mobile terminal according to the desirable downward channel designated by the call request when the call request is received by the base station.

The mobile terminal comprises:
a communication quality measuring section for measuring communication quality of each of the available downward channels;
a comparison section for selecting the desirable downward channel giving the best value of the communication quality among the available downward channels; and
a call request section for preparing a call request including information of the desirable downward channel according to a call request format to be sent to the base station.

Therefore, a mobile terminal of the invention can request a call to a base station designating a downward channel having best communication quality selected by monitoring receivable downward channels, enabling the base station to assign the best downward channel for the mobile terminal according to the designation information included in the call request data.

The foregoing, further objects, features, and advantages of this invention will become apparent from a consideration of the following description, the appended claims, and the accompanying drawings wherein the same numerals indicate the same or the corresponding parts.

In the drawings:
FIG. 1 is a block diagram illustrating the functional configuration of a mobile terminal 1 according to an embodiment of the invention;
FIG. 2 is a schematic diagram illustrating an example of communication circumstances of the mobile terminal 1;
FIG. 3A is a wave form chart schematically illustrating communication data extracted from the first downward channel having a frequency f1 of FIG. 2;
FIG. 3B is a wave form chart schematically illustrating communication data extracted from the second downward channel having a frequency f2 of FIG. 2, wherein the interference signal emitted from the interference 5 is superimposed;
FIG. 4 is a schematic diagram illustrating a downward channel request field of a call request format; and
FIG. 5 is a flowchart illustrating operation of the embodiment of FIG. 1.

Now, embodiments of the present invention will be described in connection with the drawings.

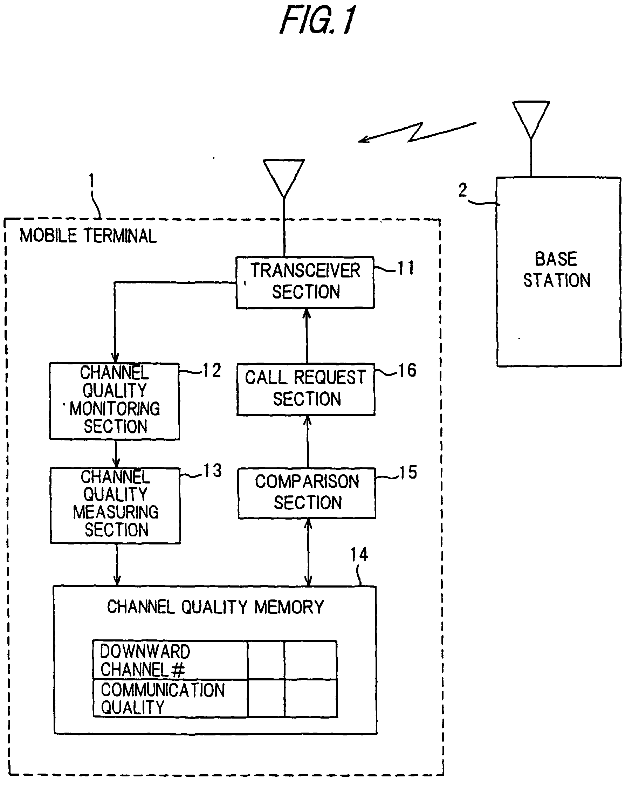

FIG. 1 is a block diagram illustrating functional configuration of a mobile terminal 1 according to an embodiment of the invention.

Referring to FIG. 1, the mobile terminal 1 for communicating with one of base stations 2 (represented by a block in the drawings) comprises a transceiver section 11, a channel quality monitoring section 12, a channel quality measuring section 13, a channel quality memory 14, a comparison section 15 and a call request section 16. The mobile terminal 1 is also provided with other ordinary functions for the mobile communication which are not depicted in the drawings.

Here, in the invention, the communication between the mobile terminal 1 and the base stations 2 is assumed to be performed according to a TDMA control wherein the transmission signal levels of the base stations 2 are fixed, that is, not to be controlled differently for each communicating mobile terminal.

The transceiver section 11 communicates with the base stations 2 through radio channels. By way of the transceiver section 11, data received from a base station through a downward channel are sent to the channel quality monitoring section 12, and a call request from the call request section 16 is transmitted to a base station through an upward control channel.

The channel quality monitoring section 12 extracts communication data included in downward channels, one by one, which are actually transmitted from nearby base stations 2 for other mobile terminals and have field intensity levels receivable by the transceiver section 11 of the mobile terminal 1, when a call is to be requested from the mobile terminal 1.

The channel quality measuring section 13 measures the communication quality of each downward channel referring to the communication data extracted by the channel quality monitoring section 12, and the channel quality memory 14 stores the communication quality of each downward channel measured by the channel quality measuring section 13.

When the communication quality of every receivable downward channel is measured, it is reported to the comparison section 15. The comparison section 15 compares the communication quality of each downward channel stored in the channel quality memory 14 with each other, selects a downward channel having the best communication quality, and notifies information of the selected downward channel to the call request section 16.

The call request section 16 prepares a call request data including the information of the selected downward channel notified from the comparison section 15 according to a call request format, which is transmitted by the transceiver section 11 to a base station transmitting the selected downward channel.

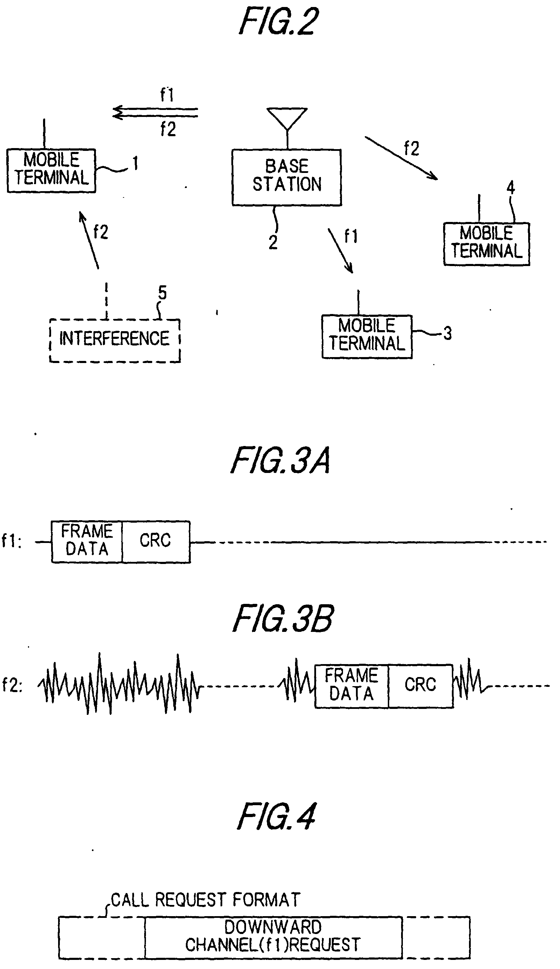

FIG. 2 is a schematic diagram illustrating an example of communication circumstances of the mobile terminal 1.

In the example of FIG. 2, there are three mobile terminals 1, 3 and 4. The mobile terminal 3 is connected to one of base stations 2 by way of a first downward channel of a frequency f1, and the mobile terminal 4 is connected to one of the base stations 2 by way of a second downward channel of another frequency f2. The mobile terminal 1 is to request a call. A block having a numeral 5 represents an interference near the mobile terminal 1 emitting an interference signal of a frequency near f2.

FIGs. 3A and 3B are wave form charts schematically illustrating communication data extracted from the first and the second downward channel, respectively, by the channel monitoring section 12 of the mobile terminal 1 of FIG. 1.

As shown in FIGs. 3A and 3B, communication data of each downward channel includes frames each comprising a frame data and a CRC (Cyclic Redundancy Check character) used for detecting communication error of the frame data. Therefore, by checking the CRC of each of a certain number of successive frames, an error rate representing the communication quality of the concerned downward channel can be determined. The frame data may be voice data and usually be encoded in cipher. However, the CRC is calculated according to encoded frame data, and hence, the error check itself of the frame data is possible, even if the frame data is encoded in cipher.

When a downward channel is assigned for more than one mobile terminal, frames allocated to different mobile terminals are included in the downward channel. However, the transmission signal level of each frame is the same in the TDMA control, as previously described. Therefore, by monitoring the certain number of successive frames of each of downward channels, a mobile terminal can discriminate the best downward channel. Furthermore, when downward channels transmitted from more than one base station are receivable by a mobile terminal, frames of an available downward channel of any of the base stations can be allocated to the mobile terminal, according to the TDMA control.

Returning to the drawings, FIG. 3A represents communication data monitored by the mobile terminal 1 of the first downward channel of the frequency f1 having a high communication quality without error which is transmitted from one of the base stations 2 for communicating with the mobile terminal 3 and monitored by the mobile terminal 1. FIG. 3B represents a monitoring result of the second downward channel of the frequency f2 transmitted from one of the base stations 2 for communicating with the mobile terminal 4 and monitored by the mobile terminal 1, wherein the interference signal emitted from the interference 5 is superimposed. Therefore, the monitoring result of the certain number of successive frames of the second downward channel gives a large error rate, that is, low communication quality.

Hence, the mobile terminal 1 selects the first downward channel of the frequency f1, and inserts downward channel request data designating the first downward channel of the frequency f1 into the call request data according to a call request format such as illustrated in FIG. 4.

Here, it is to be noted that a downward channel which is not used for any mobile terminal cannot be monitored, and consequently, cannot be evaluated. Therefore, when no downward channel is used for any other mobile terminal, the mobile terminal 1 transmits the call request data wherein the downward channel request field is left blank. In this case, the communication channel assignment is performed in the same way as performed conventionally.

On the other hand, when downward channels transmitted from more than one base station are receivable by the mobile terminal, the best downward channel may be selected from the downward channels of any of the more than one base station, and the call request data including information of the selected downward channel is transmitted to a base station transmitting the selected downward channel.

Heretofore, the communication quality is described to be evaluated malting use of the CRC. However, any other error check code may be used on condition that the data transmission error of each frame can be detected.

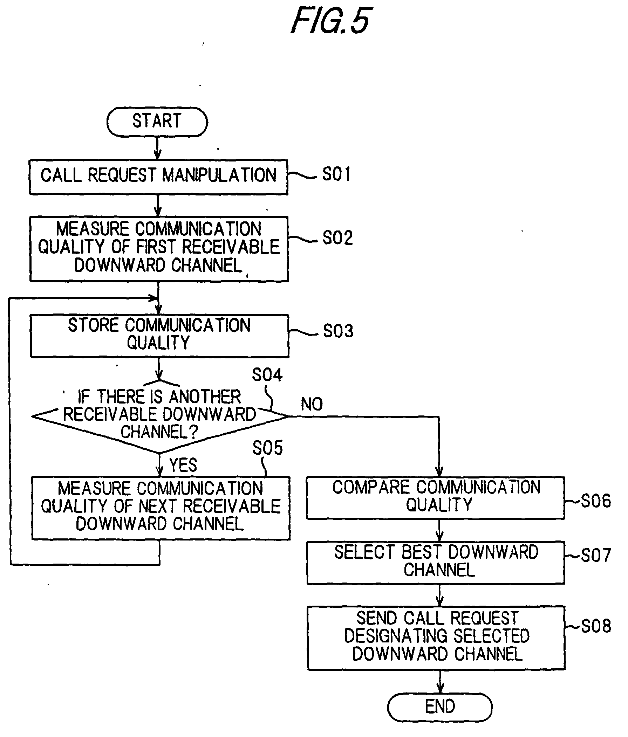

In the following paragraphs, operation of the embodiment of FIG. 1 is described further referring to the flowchart of FIG. 5.

When the mobile terminal 1 is manipulated to request a call (at step S01), the channel quality monitoring section 12 controls the transceiver section 11 to receive a first downward channel among downward channels actually used for other mobile terminals, and sends communication data of the certain number of successive frames extracted from the first downward channel to the channel quality measuring section 13, which calculates communication quality of the first downward channel (at step S02) and stores the calculation results in a field of the channel quality memory 14 corresponding to the first downward channel (at step S03).

Then, the transceiver section 11, which is controlled by the communication monitoring section 12 to search a next receivable downward channel, searches if there is another receivable downward channel or not (at step S04). When a next receivable downward channel is found, communication quality thereof is measured (at step S05) in the same way with step S02, and registered in the channel quality memory 14, returning to step S03.

Steps S03 to S05 are repeated until it is found (at step S04) that there is left no other receivable downward channel.

Then, the communication quality measuring section 13 activates the comparison section 15. The comparison section 15 compares (at step S06) each communication quality value of the downward channels registered in the communication quality memory 14 with each other, and selects (at step S07) a downward channel having the best communication quality value.

The selected downward channel is notified to the call request section 16. The call request section 16 prepares a call request data including the information of the selected downward channel according to the call request format such as illustrated in FIG. 4 to be transmitted from the transceiver section 11 for requesting the call (at step S08).

In the above operational flow, communication quality value of every receivable downward channel is described to be stored in the communication quality memory 14 to be compared afterwards. However, only information of the best downward channel and its communication quality value may be registered in the communication quality memory 14, by revising the information when there is found another downward channel giving a better communication quality value than the registered value.

In the embodiment heretofore described, monitoring of the receivable downward channels is performed only when the mobile terminal is manipulated to request a call, for economizing power consumption. However, the downward channel monitoring may be performed at predetermined intervals during the mobile terminal 1 is set in a standby mode. By determining the monitoring interval sufficiently short so that the communication circumstances of the mobile terminal 1 can be regarded to remain substantially the same in the monitoring interval, the time for selecting the best downward channel needed when the mobile terminal 1 requests the call can be economized, and further, the best downward channel can be selected from downward channels including those not used when the mobile terminal 1 requests the call, by making use of monitoring results beforehand obtained.

As heretofore described, the mobile terminal of the invention can request a call to a base station designating a downward channel having best communication quality selected by monitoring receivable downward channel. Therefore, the base station can assign the best downward channel for the mobile terminal according to the designation information included in the call request data.

## Claims

1. A method of assigning a downward channel to be used for mobile communication between a mobile terminal and one of base stations according to a TDMA (Time Division Multiple Access) control; said method comprising:
a step performed by the mobile terminal of selecting a desirable downward channel having best communication quality for the mobile terminal from available downward channels which are receivable by the mobile terminal and transmitted from any of the base stations for other mobile terminals;
a step of requesting a call designating the desirable downward channel to a base station transmitting the desirable downward channel; and
a step of assigning a downward channel to the mobile terminal according to the desirable downward channel designated by the call request when the call request is received by the base station.

2. A method of assigning a downward channel as recited in claim 1; wherein said step of selecting the desirable downward channel is performed referring to communication quality of each of the available downward channels, said communication quality being measured according to an error rate obtained for a certain number of successive frames of said each of the available downward channels making use of error check code included in each of the frames.

3. A system for assigning a downward channel to be used for mobile communication between a mobile terminal and one of base stations according to a TDMA control; said system comprising:
a mobile terminal (1) for selecting a desirable downward channel having best communication quality for the mobile terminal from available downward channels which are receivable by the mobile terminal and transmitted from any of the base stations for other mobile terminals by measuring communication quality of the available downward channels, and requesting a call with a call request including information for designating the desirable downward channel to a base station transmitting the desirable downward channel; and
a base station (2) for assigning a downward channel to the mobile terminal according to the desirable downward channel designated by the call request when the call request is received by the base station.

4. A system for assigning a downward channel as recited in claim 3, said mobile terminal comprising:
a communication quality measuring section (13) for measuring communication quality of each of the available downward channels;
a comparison section (15) for selecting the desirable downward channel giving a best value of the communication quality from the available downward channels; and
a call request section (16) for preparing a call request including information of the desirable downward channel according to a call request format to be sent to the base station.

5. A system for assigning a downward channel as recited in claim 3, wherein the mobile terminal measures the communication quality of the available downward channels when a call is to be requested.

6. A system for assigning a downward channel as recited in claim 3; wherein the mobile terminal measures the communication quality of each of the available downward channels according to an error rate obtained for a certain number of successive frames of said each of the available downward channels making use of error check code included in each of the frames.
